# EUROPEAN PATENT APPLICATION

(11) **EP 4 843 785 A1**
(43) Date of publication of application: **25.11.2026**
(21) Application number: 26176248.8
(22) Date of filing: 04.05.2026
(51) Int. Cl.: B41M 5/00, B29D 30/00

(54) **METHODS FOR MARKING RUBBER COMPONENTS IN TIRE MANUFACTURING**

(30) Priority: 14.05.2025 US 202519208032
(71) Applicant: The Goodyear Tire & Rubber Company, Akron, OH 44316 (US)
(72) Inventor: Gillmann, Thomas, L-7750 Colmar-Berg (LU); Tamagnoli, Luca, L-7750 Colmar-Berg (LU); Pociask, Lukasz, L-7750 Colmar-Berg (LU)
(74) Representative: Leslie, Edward

(57) **Abstract**

In one aspect, a method is disclosed comprising causing at least one of a laser printer, an inkjet printer, or a laser engraver to impart one or more machine-readable indicia on a compound slab following a batch-off step of a tire manufacturing process, such that: each of the one or more machine-readable indicia is imparted according to a set of imparting parameters; and each of the one or more machine-readable indicia provides an indication of a composition of the compound slab. In another aspect, a method is disclosed comprising: receiving a machine-readable indicium imparting instruction from a tire management system; and following a first processing step of a tire manufacturing process, causing at least one of a laser printer, a laser engraver, or an inkjet printer to impart at least one of the machine-readable indicium on a component in the tire manufacturing process according to the imparting instructions, wherein the machine-readable indicium provides at least an indication of a composition of the component.

## Description

### BACKGROUND OF THE INVENTION

In the manufacture of a pneumatic tire, the tire is typically built on the drum of a tire building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed, toroidally-shaped, unvulcanized tire carcass, which is known in the art as a green tire, is then inserted into a tire mold or a tire curing press for forming of the tread pattern and curing or vulcanization. Because different components used in the tire manufacturing process have specific composition requirements, it can be difficult to ensure that the different tire components have a desired composition at each stage of the tire manufacturing process.

### SUMMARY OF THE INVENTION

The invention relates to a method in accordance with claim 1, 9 or 14, respectively.

Dependent claims refer to preferred embodiments of the invention.

### BRIEF DESCRIPTION OF THE DRAWINGS

Many aspects of the present disclosure are better understood with reference to the following drawings. The components in the drawings are not necessarily to scale, with emphasis instead being placed upon clearly illustrating the principles of the disclosure. Moreover, in the drawings, like reference numerals designate like elements throughout the several views.
FIG. 1 depicts a process of printing a machine-readable indicia on a raw material, a compound, a component, or other portion of a tire in a tire manufacturing process according to various examples of the present disclosure.
FIG. 2 depicts a flowchart illustrating a process for printing a machine-readable indicia according to various examples of the present disclosure.
FIG. 3 depicts a process of reading a machine-readable indicia on a raw material, a compound, or a component of a tire in a tire manufacturing process to verify the component, raw material, or compound prior to a processing step according to various examples of the present disclosure.
FIG. 4 depicts a flowchart illustrating a process for reading a machine-readable indicia to verify one or more properties of a raw material, a compound, or a component of a tire according to various examples of the present disclosure.
FIG. 5 is a schematic block diagram illustrating marking tire components to track tire and component data according to various examples of the present disclosure.
FIG. 6 depicts a tire manufacturing process according to various examples of the present disclosure.
FIG. 7 is a perspective view illustrating a tire with a machine-readable indicia printed thereon according to various examples of the present disclosure.

### DETAILED DESCRIPTION OF PREFERRED EMBODIMENTS OF THE INVENTION

Disclosed are various examples related to systems and methods for marking components of a tire during a tire manufacturing process. Particular examples involve imparting one or more machine-readable indicia on portions of a tire component to provide an indication of a composition and/or other property related to the component. In some examples, the process involves using one or more additive techniques, such as printing to impart the one or more machine-readable indicia. In still other examples, the process involves using one or more negative techniques, such as laser engraving. In other examples, the process involves any other suitable marking technique. In particular examples, the process includes a continuous marking process. The process then involves, for example, reading the one or more machine-readable indicia prior to a processing step to verify that the component has the desired composition and/or property for the processing step. In many circumstances, it is beneficial for tire manufacturers to verify component composition and/or other properties prior to utilizing the component in the manufacture of a tire. Such verification, for example, reduces waste from the use of improper components.

In various examples, a tire manufacturing process involves formulating and processing rubber compounds for use in different components. For example, different compounds are formulated for use in specific tire parts such as the tread, sidewall, inner liner, and the like. Following formulation, various examples involve a batch-off process in which the rubber compound is formed into slabs. Following batch-off, the processed rubber compound is used for preparing various tire components. The processed rubber can, for example, be extruded into treads, calendared into plies, formed into any suitable components that form part of an assembled tire, and the like.

In various examples, the process described herein further enables traceability with respect to each raw material, compound, and component utilized in the manufacture of a tire. For example, at each step of the manufacturing process, in addition to verifying components prior to processing steps, the process stores data related to each raw material, compound, and component that goes into the finished tire. In some examples, the process involves storing, in association with a particular machine-readable indicium, the data related to each raw material, compound, and component. In this way, in some examples, the system described herein is able to access and provide full traceability data including data related to the raw materials incorporated into each individual component that makes up a finished tire.

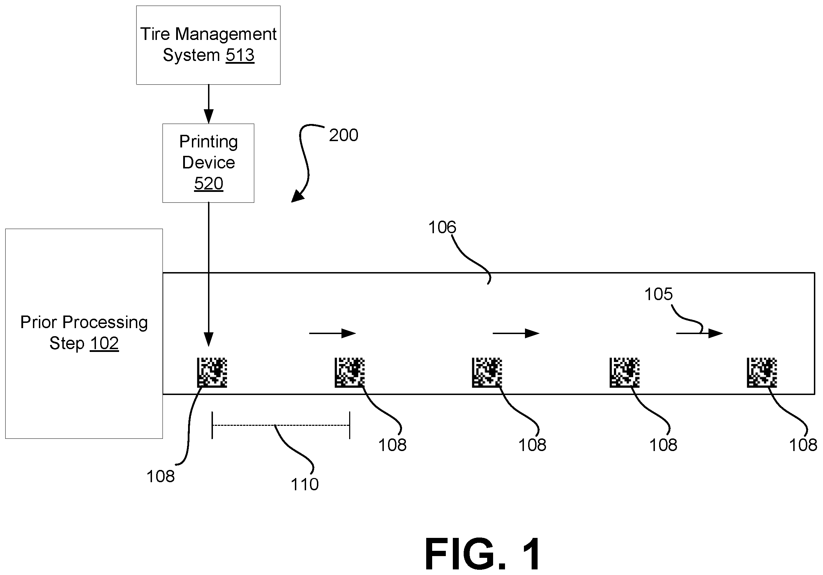

Referring to FIG. 1, a process of printing a machine-readable indicia on a component of a tire in a tire manufacturing process is shown. Although the process is described with respect to printing on a component, it should be understood that in other examples, the process involves printing on a raw material, compound, finished tire, green tire, or other suitable material during any other suitable step of tire manufacturing or portion thereof. Further, although the process of imparting one or more machine-readable indicia onto a component of a tire is generally described as printing, it should be understood that, in various examples, one or more material removing processes are used to impart the one or more machine-readable indicia. Some examples describe laser printing to impart or otherwise create one or more images of the one or more machine-readable indicia on a suitable tire component. In other examples, laser engraving is used to remove or alter material on a surface of the component to create a substantially permanent mark in the form of each particular machine-readable indicium. In still other examples, any suitable marking technique is used.

Following any suitable prior processing step 102, the printing process 200 involves using a printing device 520 to print one or more machine-readable indicia 108 on a tire component 106. In various examples, the prior processing step 102 includes any suitable step of the tire manufacturing process. For example, the printing process 200 involves using a printing device 520 to print one or more machine-readable indicia on a compound slab at a batch-off step of the manufacturing process. In other examples, the printing device 520 prints the machine-readable indicia 108 on a tread, sidewall, or other suitable component 106. In particular examples, the printing device 520 prints the machine-readable indicia 108 on a suitable rubber component 106. In other examples, the printing device 520 imparts the one or more machine-readable indicia on a carcass ply; belt ply; or other mixed component that incorporates rubber, cord, as well as other components or materials.

In some examples, the printing device 520 comprises any suitable printing device such as a laser printer, an inkjet printer, and the like. In still other examples, the printing device 520 comprises a laser engraving device. In such examples, printing the one or more machine-readable indicia refers to engraving. In some examples, a type of the printing device 520 varies depending on the prior processing step 102. In some examples, a printing device 520 positioned to print machine-readable indicia 108 on a component 106 such as a slab at a mixer or following a batch-off step includes an inkjet printer. A printing device 520 positioned to print one or more machine-readable indicia on a sidewall, tread or inner liner, in some examples, includes a laser printer.

In some examples, each machine-readable indicium 108 provides an indication of a composition of the component 106. In still other examples, each machine-readable indicium 108 provides an indication of any other suitable property of the component.

In particular examples, the printing device 520 interfaces with a tire management system 513 or other suitable system, which instructs the printing device 520 which machine-readable indicia 108 to print on the component 106. The tire management system 513 can store tire and tire component composition and/or other property data in association with particular machine-readable indicia.

In particular examples, each machine-readable indicium can include any suitable indicium such as a text string, a linear barcode, a 2D dot code a 2D barcode, a QR code, a 2D data matrix, and/or the like.

As may be understood from FIG. 1, the printing process 200 includes printing a set of machine-readable indicia 108 such that each machine-readable indicium is printed periodically along a longitudinal 105 length of the component 106. In this way, each machine-readable indicium 108 is substantially evenly spaced apart by a distance 110. In some examples, the distance 110 can be any suitable distance such as at least 20 centimeters. In other examples, each machine-readable indicium 108 is spaced apart any other suitable distance such as at least 50 centimeters, at least 1 meter, and/or the like. In still other examples, each machine-readable indicium 108 in a series of machine-readable indicia is printed sporadically or randomly. In such examples, each machine-readable indicium has a variable spacing between an adjacent machine-readable indicium. In some examples, the distance 110 can be based on the type of tire component.

In some examples, the step of printing the machine-readable indicia 108 is performed according to one or more printing parameters. In particular examples, the one or more printing parameters can be defined by a composition of a particular component 106, a type of component, or other suitable factor. In various examples, the one or more parameters can define printing size, printing location, laser power, laser size, laser frequency, laser type, ink type, and the like for the indicia 108.

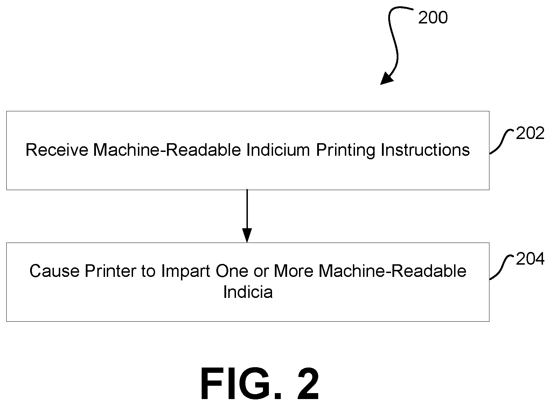

Turning to FIG. 2, a flowchart illustrating a process 200 for printing machine-readable indicia 108 on a tire component 106 is shown. In some examples, the process includes, at step 202, receiving a machine-readable indicium 108. In some examples, the printing device 520 shown in FIG. 1 receives, from the tire management system 513, instructions regarding a particular machine-readable indicium to print. The tire management system 513 can, as discussed more fully below, store and maintain tire data and component data in association with particular machine-readable indicia. In this way, the tire management system 513 can provide printing instructions including a machine-readable indicium 108 that is specific to a composition and/or one or more properties of the tire component 106 following the prior processing step. In still other examples, a user can enter a particular indicium into a tire management system 513 for printing on a particular component 106.

At step 204, the printing process 200 can involve causing the printing device 520 to impart the machine-readable indicium 108 on the component 106. As discussed above, the printing device 520, in various examples, includes any suitable laser printer, inkjet printer, and/or laser engraver. In some examples, a type of the printing device 520 depends on the specific processing step 102 that precedes the printing at step 204.

In other examples, one or more printing parameters may vary based on a composition and/or one or more properties of the tire components 106. In some examples, the tire management system 513 provides the one or more printing parameters along with the machine-readable indicium printing instructions at step 202 of the process. For example, in the case of laser printing, the process involves setting a power of the laser, position of laser marking, machine-readable indicium size, marking frequency or other suitable printing parameter based at least in part on a type of component 106 and/or one or more properties thereof. In other examples, in the case of inkjet printing, the process involves using different colored ink having different compositions depending on a type of component or stage of the manufacturing process at which the printing occurs. In some examples, the process utilizes water-based ink. In various examples, an inkjet printing process utilizes ultraviolet or other suitable ink depending on location, material type, temperature at the time of printing, or other property of the component 106.

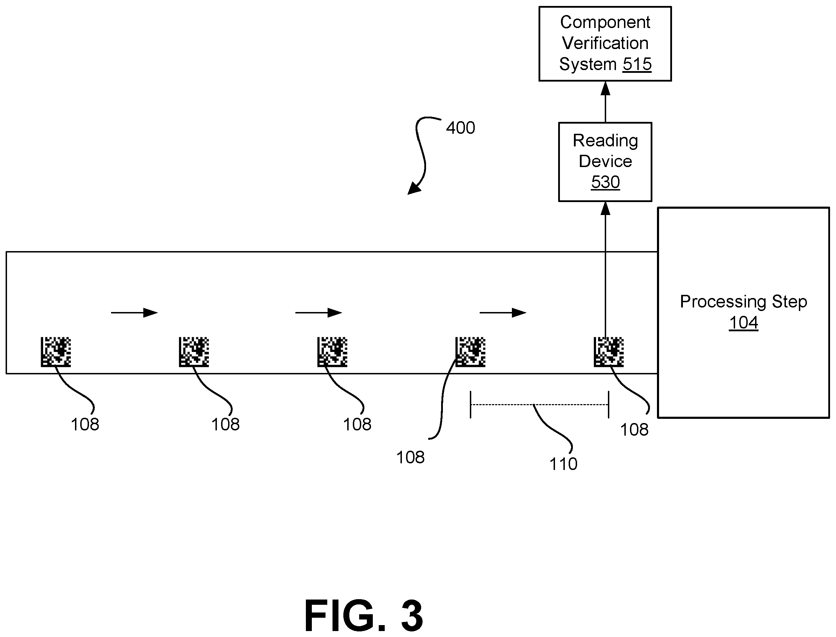

Turning to FIG. 3, a process of reading machine-readable indicia 108 on a component 106 of a tire in a tire manufacturing process is shown. Prior to any suitable processing step 104, a reading and verification process 400 involves using a reading device 530 to read the machine-readable indicia 108. In some examples, the processing step 104 includes any suitable processing step in the manufacture of a tire. In some examples, the processing step 104 includes, without limitation: (1) any suitable cooling line and/or laydown step 604 of a tire manufacturing process; (2) any suitable mixing step of a tire manufacturing process; (3) any suitable component making step of a tire manufacturing process; (4) any suitable assembly step of a tire manufacturing process; (5) any suitable extrusion step of a tire manufacturing process; and/or (6) any other suitable step of the tire manufacturing process. In some examples, the reading and verification process 400 is performed at any of a plurality of different points in the manufacturing process.

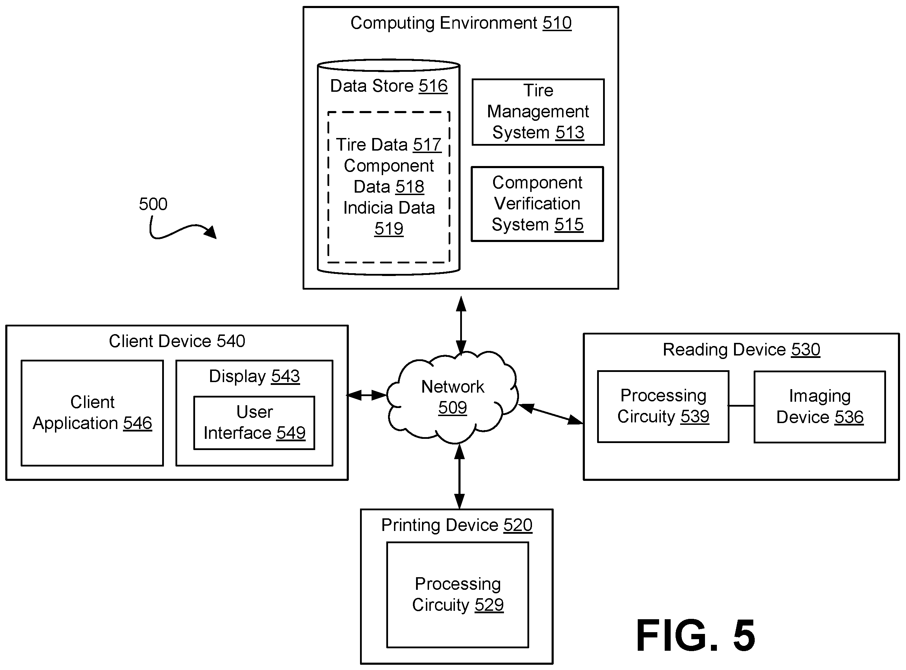

In some examples, the reading device 530 includes one or more cameras. In particular examples, each reading device 530 includes one or more artificial intelligence cameras. Additional details of examples that include one or more artificial intelligence cameras is provided below with respect to FIG. 5.

In various examples, the reading and verification process 108 involves using the reading device 530 to read each machine-readable indicium 108 as a portion of the tire component 106 on which the respective machine-readable indicium 108 is printed comes into view of the reading device 530. In some examples, the reading device 530 is configured to read each respective machine-readable indicium substantially immediately before the portion of the tire component 106 on which the respective machine-readable indicium 108 enters the processing step 104. In some examples, although a single reading device 530 is illustrated, it should be understood that one or more reading devices 530 are utilized to read each respective machine-readable indicium 108 at any suitable step of the manufacturing process.

In particular examples, the one or more reading devices 530 are configured to provide information related to the identified machine-readable indicium 108 to a component verification system 515. In various examples, the component verification system 515 accesses component data for a component 106 identified by the particular read machine-readable indicium to determine whether the component has a composition or other component property that is desired and/or required for the processing step 104.

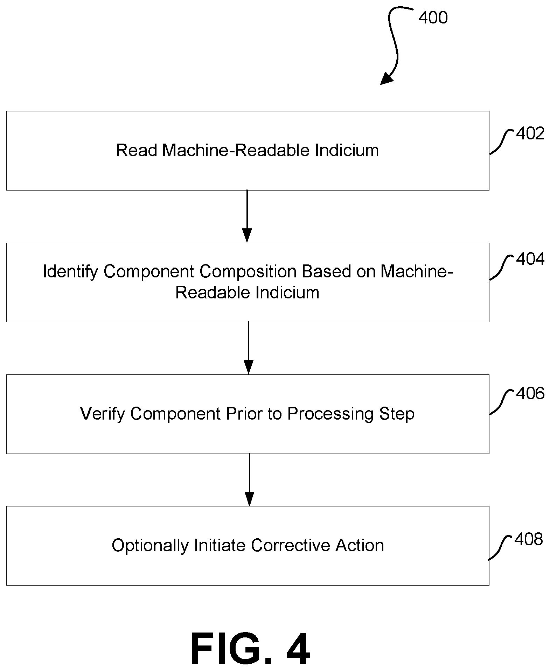

Turning to FIG. 4, additional details are provided with respect to the reading and verification process 400. At step 402, the reading and verification process 400 involves reading the machine-readable indicia 402. As described above with respect to FIG. 3, one or more reading devices 530 read one or more respective machine-readable indicium. In some examples, the one or more reading devices 530 read a sequence of machine-readable indica 108 along a longitudinal length of the tire component. In other examples, the one or more reading devices 530 read one or more machine-readable indicia 108 latitudinally across a width of the tire component. In still other examples, the one or more reading devices 530 read a set of machine-readable indicia 108 disposed in any suitable arrangement on the tire component. In this way, the process 400 provides consistent, periodic verification that a particular component 106 has a desired or required composition and/or component property prior to the component being processed at a processing step.

Referring back to FIG. 4, at step 404, the process 400 identifies the component composition and/or other property based on reading the machine-readable indicia. For example, the reading device 530 provides data related to the read machine-readable indicia 108, such as identifying information derived from the read machine-readable indicia 108 to the component verification system 515 to cause the component verification system 515 to access stored component data that is associated with the read machine-readable indicia.

At step 406, the reading and verification process 400 includes verifying the component prior to the processing step 104. Verifying the component can involve, without limitation, determining whether the component 106 has a particular composition, such as a rubber composition, required for the processing step. In some examples, verifying component 106 can be based on a type of component 106. For example, a required or desired composition and/or set of properties for a particular component 106 can vary based on whether the component is a component of a tread, sidewall, bead portion, or any other suitable component 106 of a finished tire.

In some examples, the reading and verification process 400, at step 408, involves initiating a corrective action. For example, in response to failing to verify the component 106 at step 406, the process can involve taking the corrective action. **In** some examples, failing to verify the component can include determining that the component 106 does not have a desired or required composition or other property for the processing step 104.

In particular examples, the corrective action includes, without limitation, activating an alarm, at least temporarily stopping the tire manufacturing process, diverting the component 106 from the processing step 104, preventing performance of the processing step 104, and/or other actions.

With reference to FIG. 5, shown is a network environment 500 according to various examples. The network environment 500 includes a computing environment 510 that includes a tire management system 513, a printing device 520, reading device 530, and a client device 540, which can be in data communication with each other via a network 509.

The network 509 can include wide area networks (WANs), local area networks (LANs), personal area networks (PANs), or a combination thereof. These networks can include wired or wireless components or a combination thereof. The network 509 can also include a combination of two or more networks 509. Examples of networks 509 can include the Internet, intranets, extranets, virtual private networks (VPNs), and similar networks.

The computing environment 510 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 510 can employ a plurality of computing devices that can be arranged in one or more server banks or computer banks or other arrangements. Such computing devices can be located in a single installation or can be distributed among many different geographical locations. For example, the computing environment 510 can include a plurality of computing devices that together can include a hosted computing resource, a grid computing resource or any other distributed computing arrangement. In some cases, the computing environment 510 can correspond to an elastic computing resource where the allotted capacity of processing, network, storage, or other computing-related resources can vary over time.

Various applications or other functionality can be executed in the computing environment 510. Also, various data is stored in a data store 516 that is accessible to the computing environment 510. The data store 516 can be representative of a plurality of data stores 516, which can include relational databases or non-relational databases such as object-oriented databases, hierarchical databases, hash tables or similar key-value data stores, as well as other data storage applications or data structures. The data stored in the data store 516 is associated with the operation of the various applications or functional entities described below. This data can include tire data 517, component data 518, indicia data 519, and potentially other data.

Tire data 517, in some examples, is representative of various specifications about a tire. **In** some examples, the tire data 519 includes a tire type, a tire size, information about the various properties of a tire, the position of the tire on a vehicle, component makeup of the tire at each step of the manufacture of the tire, data indicating particular raw materials incorporated into the tire and each component of the tire, as well as other information.

In some examples, the component data 518 is representative of various specifications of each component 106 used in the manufacture of a tire. **In** some examples, the component data 518 includes data related to compositions and raw materials that were used to produce the particular component 106. For example, component data 518 includes a component type, component composition, component manufacture date, a step in the manufacture of the tire the component 106 has reached, as well as other component information. In still other examples, the component data 518 includes composition data, data, time, shift data relating to when the component was produced, an age of the component, an operator working when the component was produced, other manufacturing information, and the like. **In** some examples, the component data 518 is updated at any suitable point in time before, during, and/or after the manufacturing process or any step thereof.

In still other examples, the tire data 517, component data 518, or other data stored by the system includes age data related to the tire and/or component, data of manufacture, time of manufacture, data related to whether the tire and/or component is in or out of specification, a hold status of the tire and/or component, trial data related to the tire and/or component, etc.

In particular examples, the indicia data 519 is representative of a particular machine-readable indicium and provides data related to particular components that are marked with each particular machine-readable indicium 108. In some examples, the indicia data 519 includes an identification of a particular component and/or finished tire associated with each particular machine-readable indicium to enable retrieval of data related to particular tire components 106 and/or finished tires on which the particular machine-readable indicium is printed. In this way, the system is able to access full traceability data for any finished tire or tire component 106 on which at least one machine-readable indicium is imparted.

The systems executed on the computing environment 510, for example, can include a tire management system 513, a component verification system 515, and other applications, services, processes, system, engine, or functionality not discussed in detail herein. The tire management system 513 is executed to manage a set of machine-readable indicia 108 used to identify tire component data for various tire components 108. In some examples, the tire management system 513 can generate each machine-readable indicium and associate each machine-readable indicium with a particular composition and/or set of properties. In some examples, the tire management system 513 can provide the machine-readable indicia 108 to the printing device 520 for printing on a particular component 106 based on the composition or other properties related to the component 106. The tire management system 513 can further provide data associated with a particular machine-readable indicium 108 in response to a read of the particular machine-readable indicium 108.

The component verification system 515 is executed to verify that a particular component 106 has a desired or required composition or set of properties prior to the component entering a particular processing step 104 of the tire manufacturing process. In some examples, in response to determining that the component 106 is not suitable for a processing step 104, the component verification system 515 can initiate a corrective action as described herein.

The printing device 520 can include processing circuity 529 that controls operation of one or more printing components of the printing device 520. The processing circuity 529 can comprise a processor and memory or other circuitry as needed. For example, the processing circuitry 529 can control one or more components of an inkjet or laser printer to print a machine-readable indicia on a component 106.

The reading device 530 can include processing circuitry 539 and an imaging device 539. The processing circuity 539 can comprise a processor and memory or other circuitry as needed. In some examples, the processing circuity 539 can analyze one or more images captured by the imaging device 536 to identify a particular machine-readable indicium and/or series of machine-readable indicia on a tire component 106. In some examples, the processing circuity can transmit imaging data captured by the imaging device 536 to a remote processor for analysis.

In some examples, the reading device 530 includes an artificial intelligence camera reader. In some examples, the artificial intelligence camera reader is configured to read machine-readable indicia in conditions specific to a tire manufacturing process. For example, as a result of temperatures and other conditions experienced by components during the tire manufacturing process, individual machine-readable indicium 108 can become stained, scratched, smudged, unevenly colored, or otherwise individually unreadable.

As such, in some examples, the reading device 530 is configured to capture one or more images of two or more machine-readable indicia 108 in a series on an individual component 106, filter and tune the two or more machine-readable indicia 108, and recreate a complete machine-readable indicium 108 using respective portions of each respective machine-readable indicium that are sufficiently readable to compile a complete, readable machine-readable indicium 108. In some examples in which the reading device 530 includes an artificial intelligence camera reader, the artificial intelligence camera reader is trained using imaging data captured of machine-readable indicia printed on one or more tire components in a tire manufacturing process.

A client device 540 is representative of a plurality of client devices that can be coupled to the network 509. The client device 540, in some examples, includes a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, and similar devices), an on-board computer in a vehicle, or other devices with like capability. The client device 540 can include one or more displays 543 such as liquid crystal displays (LCDs), gas plasma-based flat panel displays, organic light emitting diode (OLED) displays, electrophoretic ink ("E-ink") displays, projectors, or other types of display devices. In some instances, the display 543 can be a component of the client device 540 or can be connected to the client device 540 through a wired or wireless connection.

The client device 540 can be configured to execute various applications such as a client application 546 or other applications. The client application 546 can be executed in a client device 540 to access network content served up by the computing environment 510 or other servers, thereby rendering a user interface 549 on the display 543. For example, the client device 540 can access tire data 517, component data 518, or other data, by reading a machine-readable indicium 108 on a tire or other component 106, using an imaging or other device coupled to the client device 540. To this end, the client application 546 includes a browser, a dedicated application, or other executable, and the user interface 549 can include a network page, an application screen, or other user mechanism for obtaining user input. In some examples, the client device 540 is configured to execute applications beyond the client application 546 such as email applications, social networking applications, word processors, spreadsheets, or other applications.

In various examples, any individual component shown in the network environment 500 performs any suitable step of the printing process 200 and/or reading and verification process 400 described herein, either individual or in combination with any other component.

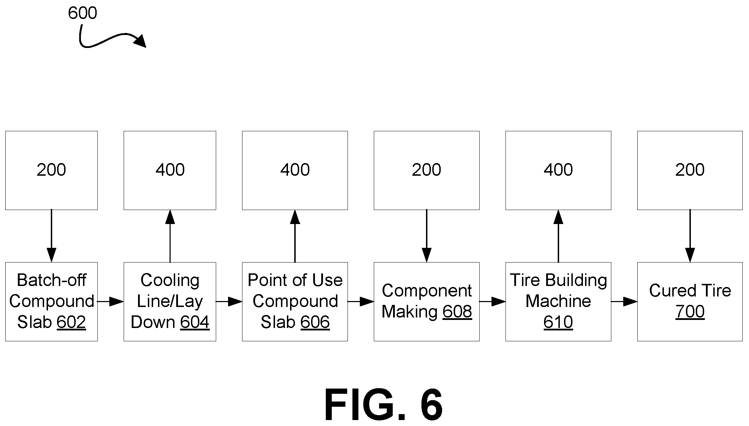

Turning to FIG. 6, an overview of an example of a tire manufacturing process 600 is shown, with various printing 200 and reading and verification 400 processes at different steps of the manufacturing process 600. It should be understood that other examples of a tire manufacturing process 600 may include additional steps. Still other examples may omit one or more of the steps shown in the example of FIG. 6. Even other examples may perform additional printing 200 and/or reading and verification 400 processes at various different processing steps than those depicted in this example.

In the example shown in FIG 6, the tire manufacturing process includes a batch-off step 602 in which a mixed rubber compound is formed into a continuous slab. In some examples, at the initial batch-off step, the manufacturing process includes a printing process 200 immediately following batch-off to print one or more machine-readable indicia on the slab as discussed herein. The one or more machine-readable indicia can provide an indication of a composition of the compound from which the slab was formed.

As part of or immediately following the batch-off step 602, during a cooling line/laydown step 604, a cooling line cools the hot rubber compound slab and prepares it for storage or downstream processing. At this step, the process can involve a reading and verification 400 process to ensure that slabs are stored and processed properly according to their composition. In various examples, the composition, at this step, is determined using any suitable reading and verification step described herein.

Following the batch-off step 602 and the cooling line/laydown step 604, a point of use compound slab 606 is ready for further processing. At this step, an additional reading and verification process is performed in some examples prior to a component manufacturing step 608 to ensure that the compound slab 606 is suitable for the specific component being made 608 at this step in the process. For example, different types of components, as described herein, require slabs of different compositions or other properties. By performing a reading and verification process 400 at this step, the manufacturing process may reduce waste from improper component production, or the production of components from an improper slab or other prior component.

As may be understood herein, in particular examples, any machine-readable indicia reading step that identifies an improper component composition or proper results in an exception, which can, for example, activate an alarm, cease or pause at least a portion of the manifesting process, or take any other suitable action. The action, in some examples, reduces waste, improves efficiency, and the like.

At the component manufacturing step 608, an additional printing process 200 is used to print one or more machine-readable indicia on the component to provide an indication of a current composition of the component 106 at this step. In some examples, the component includes any suitable component including, without limitation, sidewalls, tread, innerliner, and the like. In some examples, this printing process 200 involves encoding additional data to an existing printed machine-readable indicia on the component 106.

Following component manufacturing 608, the tire is assembled in a tire building machine 610. At this step, the green tire is assembled by building a tire carcass and adding tread, belt assembly, and other components. At this step, various components such as the inner liner, body plies, bead assemblies, sidewalls, belts, and other components are assembled. For example, the process begins with the inner liner being wrapped around a flat, rotating drum. One or more body plies are then laid down in sequence over the inner liner. Bead assemblies are then be positioned at the edges of the drum. Sidewalls are then applied. Steal belts are laid down on the carcass prior to tread application in which the tread is wrapped over the belts.

During the assembly process in the tire building machine 610, each individual component may be read and verified 400 to confirm that the proper component, having the proper composition is being utilized. In this way, the complete assembled green tire can have the proper makeup of components as required by the specific tire being assembled. Furthermore, the complete assembled green tire has a record, associated with one or mor machine-readable indicia imparted thereon, that provides full traceability of each raw material, compound, and/or component that want into the assembly.

Following assembly, the tire is cured using any suitable curing process to produce a cured tire 700. At this step, in various examples, an additional printing process 200 is performed to apply one or more new machine-readable indicia or encode additional data to one or more machine-readable indicia already printed on the cured tire 700. In some examples, the additional printing step 200 imparts a complete picture of the tire's construction, including tire data for the complete tire, data form every step of construction, composition data for each component, and the like.

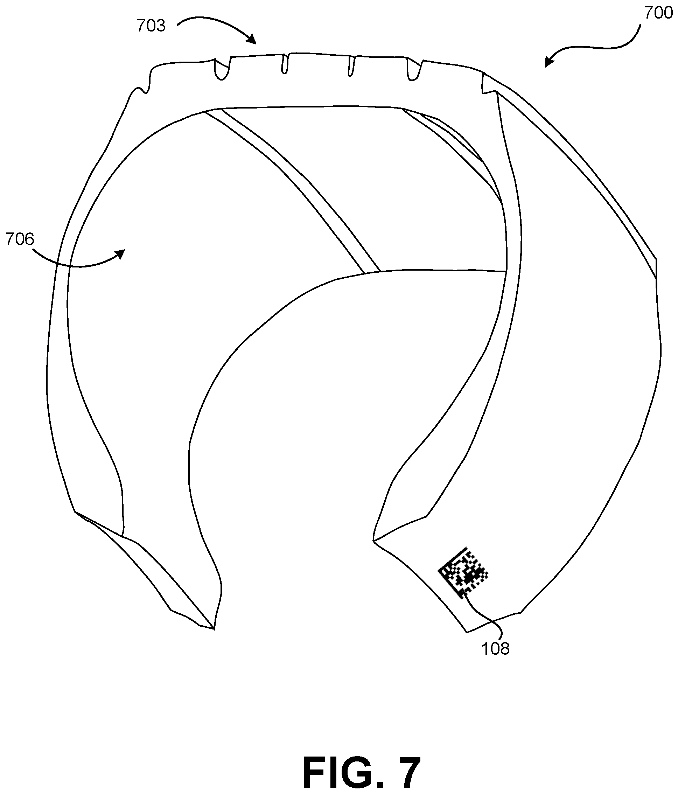

With reference to FIG. 7, shown is a cross-sectional view of a tire 700 with tread 703 and innerliner 706. In some examples, the manufactured tire includes at least one machine-readable indicium 108 printed on any suitable portion of the tire. For example, the tire 700 may include a machine-readable indicium 108 printed during any portion of the manufacturing process described herein. In some examples, the system read, using the reading and verification process 400 described herein, the machine-readable indicium 108 on the finished tire to access full traceability data for the full production cycle of the finished tire. In some examples, this enables the system to access full traceability data including data related to the raw materials incorporated into each individual component that makes up the finished tire 700.

In still other examples, a user is able to read the machine-readable indicium 108 to access tire data 517 for the finished tire, for example, using a suitable handheld reading device. In some examples, the tire data 517 can include data related to the full manufacturing process of the tire, such as data related to each component and each step of the manufacturing process for the tire 703.

Although the flowcharts herein show a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some examples, one or more of the blocks shown in the diagram can be skipped or omitted. It is understood that all such variations are within the scope of the present disclosure.

## Claims

1. A method comprising:
causing at least one of a laser printer, an inkjet printer, or a laser engraver to impart one or more machine-readable indicia on a compound slab following a batch-off step of a tire manufacturing process, such that:
each of the one or more machine-readable indicia is imparted according to a set of imparting parameters; and
each of the one or more machine-readable indicia provides an indication of a composition of the compound slab.

2. The method of claim 1, further comprising receiving an instruction from a tire management system for the tire manufacturing process to impart the machine-readable indicia indicating the composition of the compound slab.

3. The method of claim 1 or 2, wherein causing at least one of the laser printer, the inkjet printer, or the laser engraver to impart the one or more machine-readable indicia on the compound slab comprises causing at least one of the laser printer, the inkjet printer, or the laser engraver to impart a series of machine-readable indicia on the compound slab following the batch-off step by imparting each machine-readable indicium in the series of machine-readable indicia at a periodic interval, preferably a periodic interval that is defined by a desired spacing between each adjacent machine-readable indicium in the set of machine-readable indicia, along the longitudinal direction of the compound slab such that each machine-readable indicia in the series of machine-readable indicia is co-linear or substantially co-linear, evenly spaced or substantially evenly spaced, and parallel or substantially parallel to the longitudinal direction of the compound slab.

4. The method of claim 3 wherein the desired spacing comprises a distance comprising at least 20 centimeters, at least 50 centimeters or at least 1 meter; and/or wherein the desired spacing is defined by a composition of the compound slab.

5. The method of at least one of the previous claims, further comprising:
reading, at a location prior to a processing step in the tire manufacturing process downstream of the batch-off step, each respective machine-readable indicium in the series of machine-readable indicia; and
verifying based on reading each respective machine-readable indicium in the series of machine-readable indicia that the composition of the compound slab has an expected composition for the processing step in the tire manufacturing process downstream of the batch-off step.

6. The method of at least one of the previous claims, further comprising determining, based on reading a particular machine-readable indicium in the series of machine-readable indicia, that the composition of the compound slab does not have the expected composition for the processing step, causing a stop to the processing step prior to a portion of the compound slab adjacent the particular machine-readable indicium entering the processing step.

7. The method of at least one of the previous claims, wherein the processing step comprises at least one of an extrusion step, a laydown step, a component making step, or a tire-building step.

8. The method of at least one of the previous claims, wherein each machine-readable indicium is substantially identical; and/or wherein each machine-readable indicium comprises a linear barcode, a 2D dot code, a 2D barcode, a QR code, or a 2D data matrix.

9. A method comprising:
receiving a machine-readable indicium imparting instruction from a tire management system; and
following a first processing step of a tire manufacturing process, causing at least one of a laser printer, a laser engraver, or an inkjet printer to impart at least one of the machine-readable indicium on a component in the tire manufacturing process according to the imparting instructions, wherein the machine-readable indicium provides at least an indication of a composition of the component.

10. The method of claim 9, wherein:
the at least one of the machine-readable indicium comprises a series of machine-readable indicia; and
the imparting instruction determines a frequency of imparting of each of respective machine-readable indicium along a longitudinal length of the component.

11. The method of claim 9 or 10, wherein the machine-readable indicium is a first machine-readable indicium and wherein the method further comprises:
receiving a second machine-readable indicium imparting instruction from the tire management system; and
responsive to receiving the second machine-readable indicium imparting instruction, causing at least one of the laser printer, the inkjet printer, or the laser engraver to impart at least one of the second machine-readable indicium on the component in lieu of the first machine-readable indicia, wherein the second machine-readable indicium provides an indication of a change in composition of the component.

12. The method of 11, further comprising, responsive to receiving the second machine-readable indicium imparting instruction, modifying at least one imparting parameter, the at least one imparting parameter preferably comprising one or more of a printing type, a printing temperature, an ink type, an ink composition, a laser power, a laser type, a laser frequency, a laser size, a printing position, a printing size, or a printing frequency.

13. The method of at least one of the claims 9 to 12, further comprising:
reading the machine-readable indicium;
determining, prior to a second processing step of the tire manufacturing process based on the machine-readable indicium, whether the component has a required composition for the second processing step;
responsive to determining that the component has the required composition, causing performance of the second processing step using the component; and
responsive to determining that the component does not have the required composition, taking corrective action.

14. A method comprising:
reading, using a reading device, at least a first machine-readable indicia imparted on a tire component in a tire manufacturing process prior to a first processing step in the tire manufacturing process;
verifying, prior to the first processing step based on the first machine-readable indicium, that the tire component has an expected or desired property for the first processing step; and
in response to determining that the tire component does not have the expected or desired property for the first processing step, taking a corrective action.

15. The method of claim 14, wherein (i) the corrective action comprises at least one of activating an alarm or at least temporarily stopping the first processing step; and/or wherein (ii) reading at least the first machine-readable indicium comprises:
reading the first machine-readable indicium;
determining, based on reading the first machine-readable indicium, that the first machine-readable indicium is not readable;
reading, using the reading device, a second machine-readable indicium on the tire component;
reconstructing the first machine-readable indicium using at least a portion of the second machine-readable indicium to form a reconstructed machine-readable indicium; and
verifying, prior to the first processing step based on the reconstructed machine-readable indicium, that the tire component has an expected or desired property for the first processing step.
